# FASCICULE DE BREVET EUROPEEN

(11) **EP 1 531 255 B1**
(45) Date de publication et mention de la délivrance du brevet: **16.08.2006**
(21) Numéro de dépôt: 04300787.1
(22) Date de dépôt: 15.11.2004
(51) Int. Cl.: F02F 7/00, F02M 61/14

(54) **Agencement pour l'étanchéité d'un puits d'injecteur**
Dichtungsanordnung einer Einspritzdüsenbohrung
Sealing arrangement for an injector housing

(30) Priorité: 14.11.2003 FR 0313363
(43) Date de publication de la demande: 18.05.2005
(73) Titulaire: Renault s.a.s., 92100 Boulogne Billancourt (FR)
(72) Inventeur: Mallet, Philippe, 78810 FEUCHEROLLES (FR); Frigo, Marc, 91130 LINAS (FR); Bossavie, Vincent, 92310 Sevres (FR)

(56) Documents cités:
- DE-B- 1 224 092
- US-A- 5 367 993
- US-A- 5 896 837
- PATENT ABSTRACTS OF JAPAN vol. 2003, no. 02, 5 février 2003 (2003-02-05) & JP 2002 310040 A (TOYOTA MOTOR CORP), 23 octobre 2002 (2002-10-23)

## Description

L'invention concerne un agencement pour l'étanchéité d'un puits d'injecteur et l'étanchéité entre une culasse et un couvre-culasse d'un moteur de véhicule automobile.

L'invention concerne plus particulièrement un agencement pour l'étanchéité entre une culasse et un couvre-culasse d'un moteur de véhicule automobile dont un alésage et un puits associés coaxiaux sont traversés par un injecteur sensiblement cylindrique de diamètre déterminé dudit moteur, du type qui comporte un joint comportant au moins une partie torique qui est montée coaxialement autour de l'alésage, et du puits à la jonction d'une face supérieure de la culasse et d'une face inférieure du couvre-culasse.

On connaît de nombreux exemples d'agencements de ce type.

Selon une conception connue voir par example DE 1224092 B ou JP 2002310040 A, le joint torique qui est monté coaxialement autour de l'alésage et du puits à la jonction de la face supérieure de la culasse et de la face inférieure du couvre-culasse permet d'éviter les infiltrations de l'huile contenue dans le couvre-culasse dans le puits, ceci afin notamment de préserver la propreté du fond du puits en cas de démontage de l'injecteur.

Toutefois, cette conception n'isole pas l'intérieur du puits du milieu extérieur, et le puits peut être amené, au cours du fonctionnement du moteur, à se remplir de différents corps étrangers rendant problématique le démontage de l'injecteur, et plus encore son remontage, lesdits corps étrangers pouvant adhérer à une face de fond du puits sur laquelle repose l'injecteur.

Par ailleurs, cette conception ne permet pas, lors de l'assemblage du couvre-culasse à la culasse, de s'assurer de la présence du joint qui est alors entièrement dissimulé dans le couvre-culasse.

Pour remédier à ces inconvénients, l'invention propose un nouveau type de joint permettant à un opérateur en charge de l'assemblage du couvre-culasse et de la culasse de s'assurer de la présence du joint et permettant aussi d'assurer une étanchéité du puits vis à vis du milieu extérieur.

Dans ce but, l'invention propose un agencement du type décrit précédemment, caractérisé en ce que le joint comporte une lèvre plane qui s'étend vers l'intérieur à partie de sa partie torique, qui fait saillie dans le puits, et qui est destiné à lécher l'injecteur pour assurer l'étanchéité du puits aux corps étrangers.

Selon d'autres caractéristiques de l'invention :
- la lèvre est constituée d'une membrane transversale qui est venue de matière avec la partie torique du joint et qui comporte un perçage d'un diamètre au plus égal au diamètre de l'injecteur,
- la membrane est souple et le perçage de la membrane est d'un diamètre inférieur à celui de l'injecteur pour que la lèvre lèche l'injecteur sans jeu lors du montage de l'injecteur dans le puits,
- le joint est reçu dans une cavité complémentaire du couvre-culasse à partir de laquelle il affleure dans l'alignement du plan de jonction des faces inférieure du couvre-culasse et supérieure de la culasse,
- le joint est réalisé en un matériau élastomère.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe d'un agencement selon un état antérieur de la technique ;
- la figure 2 est une vue en coupe d'un agencement selon l'invention représenté en l'absence de l'injecteur ;
- la figure 3 est une vue en coupe d'un agencement selon l'invention représenté avec l'injecteur monté ;
- la figure 4 est une vue en perspective du joint de l'agencement.

Dans la description qui va suivre, des chiffres de référence identiques désignent des pièces identiques ou ayant des fonctions similaires.

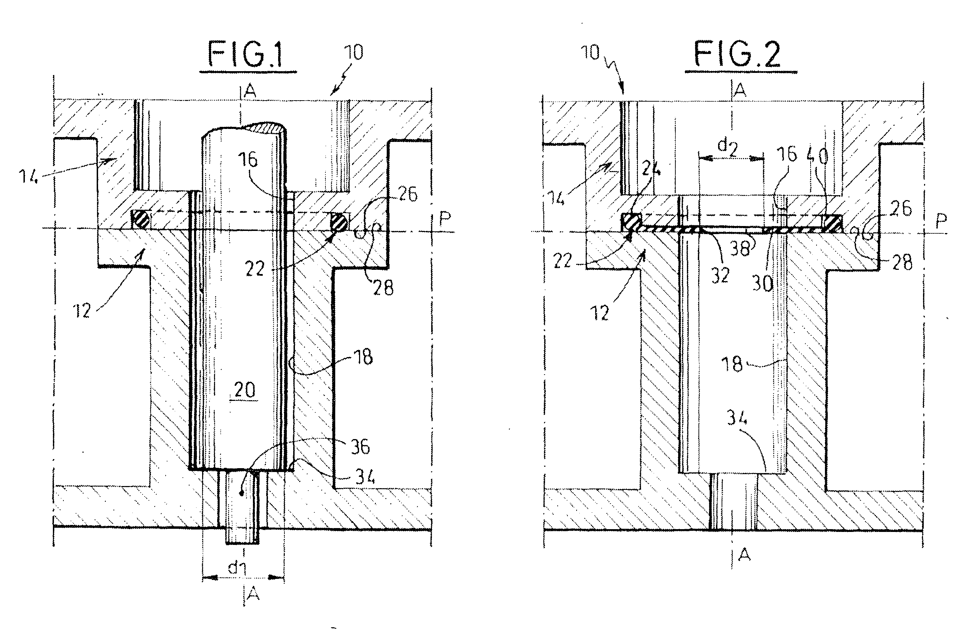

Par convention, les termes "supérieur" ou "inférieur" désignent respectivement des éléments ou des positions orientés respectivement vers le haut ou le bas des figures 1 à 4.

On a représenté à la figure 1 l'ensemble d'un agencement 10 pour l'étanchéité entre une culasse 12 et un couvre-culasse 14 d'un moteur de véhicule automobile. De manière connue un alésage 16 du couvre-culasse 14 et un puits 18 de la culasse, tous deux coaxiaux d'axe "A", sont traversés par un même injecteur 20 sensiblement cylindrique, d'un diamètre "d1" déterminé.

L'agencement 10 comporte un joint 22 torique qui est monté coaxialement autour de l'alésage 16 et du puits 18 à la jonction d'une face supérieure 26 de la culasse 12 et d'une face inférieure 28 du couvre-culasse 14.

Dans cette configuration, le joint 22 permet d'éviter les infiltrations de l'huile contenue dans le couvre-culasse 14 dans le puits 18, ceci afin notamment de préserver la propreté d'un fond 34 du puits 18 en cas de démontage de l'injecteur 20.

Toutefois, cette conception n'isole pas l'intérieur du puits 18 du milieu extérieur, et le puits 18 peut être amené, au cours du fonctionnement du moteur, à se remplir de différents corps étrangers rendant problématique le démontage ou le remontage de l'injecteur 20.

Par ailleurs, le joint 22 étant entièrement dissimulé dans le couvre-culasse 14, il est impossible à un opérateur en charge du montage du couvre-culasse 14 sur la culasse 12 de s'assurer de la présence du joint 22.

L'invention permet de remédier à ces inconvénients en proposant un joint 22 visible de l'extérieur du couvre-culasse 14 et assurant une étanchéité du puits 18 aux corps étrangers issus du milieu extérieur.

Comme l'illustrent les figures 2 à 4, dans ce but, l'invention propose un agencement 10 du type décrit précédemment, caractérisé en ce que le joint 22 comporte une lèvre plane 30 qui s'étend vers l'intérieur à partie de sa partie torique 24, qui fait saillie dans le puits 18, et qui est destinée à lécher l'injecteur 20 pour assurer l'étanchéité du puits 18 aux corps étrangers.

Comme l'illustre la figure 2, en l'absence d'injecteur 20 dans le puits 18, l'extrémité intérieure 32 de la lèvre plane 30 fait saillie à l'intérieur du puits 18, ce qui permet à un opérateur en charge du montage de l'injecteur 20 de s'assurer de la présence du joint 22 préalablement au montage de l'injecteur 20,

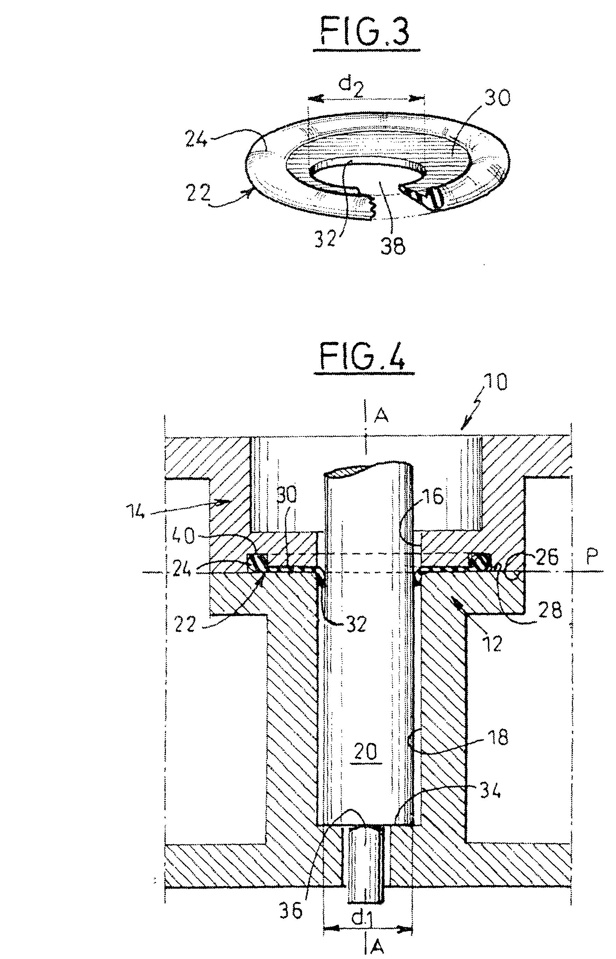

Puis, une fois que l'injecteur 20 est monté dans le puits 18, comme représenté à la figure 3, l'extrémité intérieure 32 de la lèvre plane 30 lèche l'injecteur 20 ce qui permet d'éviter l'intrusion de corps étrangers dans le puits 18, notamment à proximité d'un fond 34 du puits recevant une extrémité inférieure 36 de l'injecteur 20 qui traverse la culasse 12 et qui est particulièrement sensible à la présence de corps étrangers.

Plus particulèrement, la lèvre 30 est constituée d'une membrane transversale qui est venue de matière avec la partie torique 24 du joint 22 et qui comporte un perçage 38 d'un diamètre "d2" au plus égal au diamètre "d1" de l'injecteur 20.

Dans le mode réalisation préféré de l'invention, comme l'illustre la figure 3, la membrane 30 est souple et le perçage 38 de la membrane 30 est d'un diamètre "d2" inférieur à celui de l'injecteur 20. De la sorte, lors de l'introduction de l'injecteur 20 dans le puits 18, celui-ci passe au travers de la lèvre 30 formant membrane, et la lèvre 30 se déforme au voisinage de son extrémité 32, de sorte que ladite extrémité 32 lèche l'injecteur 20 sans jeu.

Dans le mode de réalisation préféré de l'invention, le joint 22 est reçu dans une cavité 40 complémentaire du couvre-culasse 14 à partir de laquelle il affleure dans l'alignement du plan "P" de jonction des faces inférieure 28 du couvre-culasse 14 et supérieure 26 de la culasse 12.

Cette configuration n'est pas limitative de l'invention, et il sera compris que par une simple inversion mécanique, le joint 22 pourrait être reçu dans une cavité complémentaire de la culasse à partir de laquelle il affleurerait dans l'alignement du plan de jonction des faces inférieure 28 du couvre-culasse 14 et supérieure 26 de la culasse 12.

Il sera compris que, pour que le joint 22 présente la souplesse requise, il est réalisé de préférence en un matériau élastomère.

L'invention propose donc un agencement permettant d'assurer la facilité de montage d'un couvre-culasse 14 sur une culasse 12 et une parfaite étanchéité d'un puits 18 d'injecteur.

## Revendications

1. Agencement (10) pour l'étanchéité entre une culasse (12) et un couvre-culasse (14) d'un moteur de véhicule automobile dont un alésage (16) et un puits (18) associés coaxiaux sont traversés par un injecteur (20) sensiblement cylindrique de diamètre (d1) déterminé dudit moteur, du type qui comporte un joint (22) comportant au moins une partie torique (24) qui est montée coaxialement autour de l'alésage (16) et du puits (18) à la jonction d'une face supérieure (26) de la culasse (12) et d'une face inférieure (28) du cauvre-culasse (14),
**caractérisé en ce que** le joint (22) comporte une lèvre plane (30) qui s'étend vers l'intérieur à partie de sa partie torique (24), qui fait saillie dans le puits (18), et qui est destiné à lécher l'injecteur (20) pour assurer l'étanchéité du puits (18) aux corps étrangers.

2. Agencement (10) selon la revendication précédente, **caractérisé en ce que** la lèvre (30) est constituée d'une membrane transversale qui est venue de matière avec la partie torique (24) du joint (22) et qui comporte un perçage (38) d'un diamètre (d2) au plus égal au diamètre (d1) de l'injecteur (20).

3. Agencement (10) selon la revendication précédente, **caractérisé en ce que** la membrane (30) est souple et **en ce que** le perçage (38) de la membrane est d'un diamètre (d2) inférieur au diamètre (d1) de l'injecteur (20) pour que la lèvre (30) lèche l'injecteur (20) sans jeu lors du montage de l'injecteur (20) dans le puits (18).

4. Agencement (10) selon l'une quelconque des revendications précédentes, **caractérisé en ce que** le joint (22) est reçu dans une cavité (40) complémentaire du couvre-culasse (14) à partir de laquelle il affleure dans l'alignement du plan (P) de jonction des faces inférieure (28) du couvre-culasse (14) et supérieure (26) de la culasse (12).

5. Agencement (10) selon l'une des revendications précédentes, **caractérisé en ce que** le joint (22) est réalisé en un matériau élastomère.

## Claims

1. An arrangement (10) for leak-tightness between a cylinder head (12) and a cylinder head cover (14) of an automobile vehicle engine of which an associated coaxial bore (16) and sump (18) are traversed by a substantially cylindrical injector (20) of predetermined diameter (d1) of the engine, of the type comprising a joint (22) comprising at least a toric portion (24) which is mounted coaxially about the bore (16) and the sump (18) at the junction of an upper surface (26) of the cylinder head (12) and a lower surface (28) of the cylinder head cover (14), **characterised in that** the joint (22) comprises a planar lip (30) which extends inwards from its toric portion (24), which projects into the sump (18), and which is adapted to hug the injector (20) in order to ensure that the sump (18) is leak-tight against foreign bodies.

2. An arrangement (10) as claimed in the preceding claim, **characterised in that** the lip (30) is formed by a transverse membrane which is integral with the toric portion (24) of the joint (22) and which comprises a bore (38) of a diameter (d2) at most equal to the diameter (d1) of the injector (20).

3. An arrangement (10) as claimed in the preceding claim, **characterised in that** the membrane (30) is flexible and **in that** the bore (38) of the membrane is of a diameter (d2) lower than the diameter (d1) of the injector (20) so that the lip (30) hugs the injector (20) without play during mounting of the injector (20) in the sump (18).

4. An arrangement (10) as claimed in any one of the preceding claims, **characterised in that** the joint (22) is received in a complementary cavity (40) of the cylinder head cover (14) from which is it flush with the alignment of the plane (P) of junction of the lower surface (28) of the cylinder head cover (14) and the upper surface (26) of the cylinder head (12).

5. An arrangement (10) as claimed in one of the preceding claims, **characterised in that** the joint is made from an elastomer material.

## Patentansprüche

1. Anordnung (10) für die Abdichtung zwischen einem Zylinderkopf (12) und einem Zylinderkopfdeckel (14) eines Motors eines Kraftfahrzeugs, von dem eine Bohrung (16) und ein zugehöriger koaxialer Schacht (18) von einer im Wesentlichen zylindrischen Einspritzdüse (20) eines gegebenen Durchmessers (d1) des Motors durchquert werden, von der Art, welche eine Dichtung (22) aufweist, welche mindestens einen torusförmigen Teil (24) aufweist, welcher koaxial um die Bohrung (16) und den Schacht (18) herum an der Verbindungsstelle einer oberen Fläche (26) des Zylinderkopfs (12) und einer unteren Fläche (28) des Zylinderkopfdeckels (14) montiert ist,
**dadurch gekennzeichnet, dass** die Dichtung (22) eine ebene Lippe (30) aufweist, die sich ausgehend von ihrem torusförmigen Teil (24) in Richtung nach innen erstreckt, die in den Schacht (18) vorragt und welche dafür bestimmt ist, sich lippenförmig an der Einspritzdüse (20) anzulegen, um die Abdichtung des Schachts (18) gegenüber Fremdkörpern sicherzustellen.

2. Anordnung (10) nach dem vorangegangenen Anspruch, **dadurch gekennzeichnet, dass** die Lippe (30) aus einer transversalen Membran gebildet ist, welche aus dem Material heraus mit dem torusförmigen Teil (24) der Dichtung (22) gebildet ist und welche eine Bohrung (38) von einem Durchmesser (d2) maximal gleich zu dem Durchmesser (d1) der Einspritzdüse (20) aufweist.

3. Anordnung (10) nach dem vorangegangenen Anspruch, **dadurch gekennzeichnet, dass** die Membran (30) nachgiebig ist und dass die Bohrung (38) der Membran von einem Durchmesser (d2) geringer als der Durchmesser (d1) der Einspritzdüse (20) ist, damit die Lippe (30) sich lippenförmig an der Einspritzdüse (20) ohne Spiel während der Montage der Einspritzdüse (20) in dem Schacht (18) anlegt.

4. Anordnung (10) nach irgendeinem der vorangegangenen Ansprüche, **dadurch gekennzeichnet, dass** die Dichtung (22) in einem komplementären Hohlraum (40) des Zylinderkopfdeckels (14) aufgenommen ist, ausgehend von welchem sie in der Ausrichtung der Ebene (P) der Verbindungsstelle der unteren Fläche (28) des Zylinderkopfdeckels (14) und der oberen Fläche (26) des Zylinderkopfs (12) bündig ist.

5. Anordnung (10) nach einem der vorangegangenen Ansprüche, **dadurch gekennzeichnet, dass** die Dichtung (22) aus einem elastomeren Material realisiert ist.
